# FASCICULE DE BREVET EUROPEEN

(11) **EP 4 179 190 B1**
(45) Date de publication et mention de la délivrance du brevet: **02.04.2025**
(21) Numéro de dépôt: 21758671.8
(22) Date de dépôt: 10.08.2021
(51) Int. Cl.: F02C 9/58, F02C 9/20, F02K 3/06, F02K 3/072

(54) **MÉTHODE ET SYSTÈME DE RÉGULATION DE POUSSÉE D'UNE TURBOMACHINE D'AÉRONEF**
VERFAHREN UND SYSTEM ZUR STEUERUNG DES SCHUBS EINER FLUGZEUGTURBOMASCHINE
METHOD AND SYSTEM FOR CONTROLLING THE THRUST OF AN AIRCRAFT TURBOMACHINE

(30) Priorité: 14.08.2020 BE 202005570
(43) Date de publication de la demande: 17.05.2023
(73) Titulaire: Safran Aero Boosters, 4041 Herstal (BE)
(72) Inventeur: PRINCIVALLE, Rémy Henri Pierre, 4041 Herstal (BE)
(74) Mandataire: Gevers Patents
(86) Numéro de dépôt international: PCT/EP2021/072279
(87) Numéro de publication internationale: WO 2022/034083

(56) Documents cités:
- US-A- 4 080 785
- US-A1- 2017 218 841
- US-A1- 2020 088 108

## Description

### Domaine technique

L'invention concerne une méthode et un système de régulation de poussée d'une turbomachine d'aéronef.

### Art antérieur

Pour augmenter le rendement d'une turbomachine d'aéronef, il est connu d'accroître la dimension de son ou ses hélices (carénées ou non) tout en adaptant de façon mécanique et/ou aérodynamique la turbomachine.

C'est le cas notamment pour des turboréacteurs (également appelés « turbofans ») à double flux, par exemple les turboréacteurs dits « UHBR » (*Ultra High By Pass Ratio,* en anglais) dont l'hélice carénée, généralement appelée « fan » ou « soufflante », peut être à calage variable et de grande dimension, pour absorber et accélérer un grand débit d'air.

C'est également le cas des propulseurs du type « rotor ouvert » (désigné couramment en anglais par les termes « *open rotor* », « *propfan* » ou « *unducted fan* »), par exemple, les propulseurs dits « USF » (*Unducted Single Fan,* en anglais, comprenant une seule hélice) ou « CROR » (rotor ouvert avec deux hélices contrarotatives *Contra-Rotating Open Rotor,* en anglais) qui visent à combiner les performances d'un turboréacteur et d'un turbopropulseur, et comprenant une ou deux hélices de propulsion rapides non carénées de grande dimension.

Dans ces deux cas, le « taux de dilution », c'est-à-dire le rapport entre, d'une part, le flux d'air froid (appelé « flux secondaire ») qui est accéléré par la ou les hélices sans traverser la chambre de combustion de la turbomachine d'aéronef, et d'autre part, le flux d'air chaud (appelé « flux principal ») qui traverse cette dernière, est grand, généralement égal à 20 ou plus. La consommation en carburant s'en trouve ainsi réduite.

Il est connu de réguler la poussée d'une turbomachine d'aéronef standard, dont le taux de dilution est plus faible, en agissant sur la vitesse de rotation de la soufflante dans le cas des turboréacteurs à double flux, ou sur un calage des pales de la ou des hélices et le débit de carburant injecté dans la chambre de combustion dans le cas des turbopropulseurs. Ces méthodes sont également étendues à des turbomachines d'aéronef à grand taux de dilution, par exemple, dans le document US 2020/088108 A1. Elles pourraient néanmoins être améliorées pour de telles turbomachines d'aéronef.

Le document US2017/218841 A1 divulgue un autre turbofan selon l'art antérieur.

### Exposé de l'invention

Un objet de l'invention est de fournir une méthode de régulation de poussée de turbomachines d'aéronef à grand taux de dilution telles que celles qu'introduites ci-dessus qui soit précise et efficace. En particulier, dans le contexte de l'invention, la turbomachine d'aéronef comprend :
- (au moins) une hélice comprenant une pluralité de pales,
- un système à calage variable des pales ;
- et, successivement le long d'un axe moteur de la turbomachine :
   - un compresseur basse pression comprenant au moins un redresseur muni d'un système à calage variable d'aubes configuré pour modifier une orientation d'aubes du redresseur,
   - un compresseur haute pression,
   - une chambre de combustion,
   - au moins une turbine, préférentiellement une turbine basse pression et une turbine haute pression.

Cette turbomachine d'aéronef est d'un taux de dilution préféré d'au moins 20, optionnellement, d'au moins 30. Elle comprend préférentiellement un couplage mécanique entre cette au moins une hélice et le compresseur basse pression. Le couplage mécanique comprend un arbre (dit « arbre basse pression ») reliant la au moins une hélice et le compresseur basse pression, soit de façon directe, soit via un réducteur interposé, de telle sorte que les vitesses de rotation de la au moins une hélice et du compresseur basse pression sont proportionnelles. Par soucis de concision, les termes « l'hélice » et « le redresseur » seront respectivement utilisés ci-après pour désigner « la (au moins une) hélice » et « le au moins un redresseur ».

Il peut sembler légitime de tenter d'exploiter des méthodes de régulation de l'état de l'art pour des turbomachine d'aéronef à plus faible taux de dilution. Toutefois aucune ne répond de façon satisfaisante à l'objet de l'invention. En effet, d'une part, vu que les hélices de ces turbomachines sont de grande dimension, leur inertie est également grande, ce qui rend leur variation en régime assez lente. Il semble dès lors complexe de mettre en place une régulation de la poussée de la turbomachine en agissant sur la vitesse de rotation de ces hélices. D'autre part, il existe une imprécision significative sur le calage des pales d'une telle hélice, ce qui induit une trop grande incertitude sur le point de fonctionnement du compresseur basse pression entre ses bas rendements et sa ligne dite « de pompage » (et/ou « décrochage »), le rendement de ce dernier, et donc de la turbomachine, étant alors pénalisé.

C'est la raison pour laquelle, la présente invention propose une méthode de régulation de poussée d'une telle turbomachine d'aéronef comprenant les étapes suivantes :
(i) faire varier un calage d'aubes du redresseur au moyen du système à calage variable d'aubes pour réguler en boucle ouverte la poussée de la turbomachine ;
(ii) réguler un calage de pales de l'hélice en boucle fermée sur base d'une vitesse de rotation de l'hélice, au moyen du système à calage variable de pales.

Cette méthode de régulation est à la fois précise et efficace. Elle s'écarte ingénieusement des adaptations des solutions existantes pour les turbomachines d'aéronef de taux de dilution inférieur pour répondre aux obstacles techniques que ces solutions soulèvent. En effet, elle propose avantageusement de réguler la poussée de la turbomachine par une action directe sur le système à calage variable d'aubes du redresseur au lieu d'agir sur la vitesse de rotation ou sur le calage de l'hélice. La plage de variation du calage d'aubes du redresseur, comprise de préférence entre 0 et 60 degrés, plus préférentiellement, entre 0 et 30 degrés, et plus grande que celle du calage des pales de l'hélice de sorte que pour une même précision absolue (ΔC), une meilleure précision relative sur le calage (c'est-à-dire le rapport entre ΔC et la taille de cette plage de variation) peut être atteinte. En outre, la sélection de poussée ainsi implémentée présente l'avantage d'être particulièrement réactive vu qu'elle se fait sur le débit d'air au sein des compresseurs qui présente une inertie plus faible. En parallèle, et de façon avantageuse, la méthode propose un contrôle sur la vitesse de rotation de l'hélice par une régulation du calage des pales de l'hélice, en boucle fermée. De cette façon, le système de calage des pales de l'hélice n'est pas utilisé pour réguler la poussée, mais bien pour maîtriser la vitesse de rotation de l'hélice, qui par sa grande inertie, sera de préférence de la sorte maintenue à une vitesse de rotation correspondant à l'image du calage d'aubes du redresseur par une fonction essentiellement constante ou affine associée à chaque régime stationnaire. De préférence, le calage de toutes les aubes du redresseur est apte à varier à l'étape (i) pour réguler la poussée de la turbomachine. De façon préférée, le calage de toutes les pales de l'hélice est régulé à l'étape (ii).

Par soucis d'exhaustivité, il est rappelé qu'une « régulation (ou contrôle) en boucle ouverte » d'un système est une régulation qui ne prend pas en compte la réponse du système, et une « régulation (ou contrôle) boucle fermé » est une régulation qui prend en compte une telle réponse. Dans le cas de la présente invention, une sélection de poussée se traduit directement par une action sur le système à calage variable d'aubes du redresseur, alors que le calage de pales de l'hélice est régulé sur base de sa vitesse de rotation, cette régulation impliquant une mesure régulière de la vitesse de rotation de l'hélice, et ce de préférence pour assurer sa conformité avec un régime stationnaire donné.

Il est également précisé que l'usage, dans le présent document, du verbe « comprendre », de ses variantes, ainsi que ses conjugaisons, ne peut en aucune façon exclure la présence d'éléments autres que ceux mentionnés. L'usage, dans ce document, des termes « un », « une », « au moins un(e) », « le », « la » ou « l' », pour introduire un élément n'exclut pas la présence d'une pluralité de ces éléments. Les termes « premier », « deuxième », « troisième », et ainsi de suite, sont, quant à eux, utilisés exclusivement pour différencier différents éléments semblables, et ce sans impliquer d'ordre entre ces éléments.

La méthode selon l'invention est de préférence exécutée en régime stationnaire. En particulier, selon un mode de réalisation préféré de l'invention, la méthode comprend en outre une étape (0) qui précède les étapes (i) et (ii) : (0) sélectionner un régime stationnaire pour la turbomachine d'aéronef ;
le calage de pales de l'hélice étant alors régulé à l'étape (ii) sur base du régime stationnaire sélectionné à l'étape.

Le régime stationnaire est préférentiellement choisi parmi une liste de régimes connus d'un homme du métier selon différentes phases de vol tels que « Take-off », « Cruise » et « Reverse ». À chaque régime stationnaire, il est ainsi préférentiellement associé des paramètres de régulation gouvernant l'étape (ii) (et/ou l'étape (iii) qui sera introduite par la suite).

Selon un mode de réalisation préféré de la présente invention, le calage de pales de l'hélice est régulé à l'étape (ii) pour que la vitesse de rotation de l'hélice corresponde à une première fonction mathématique du calage d'aubes du redresseur, la première fonction dépendant du régime stationnaire sélectionné à ladite étape (0). En d'autres termes à chaque régime stationnaire est associé préalablement une telle première fonction sur base de laquelle la régulation de l'étape (ii) sera effectuée. De préférence, pour chacun des régimes stationnaires considérés, cette première fonction est une fonction constante ou essentiellement constante de sorte que l'étape (ii) permet de maintenir une vitesse de rotation de l'hélice constante ou essentiellement constante, en prenant ainsi en compte l'inertie de l'hélice due à sa grande dimension, et ce sans impact négatif sur le rendement de la turbomachine ni sur l'efficacité de la régulation de sa poussée. Dans ce cas, cette vitesse de rotation constante ou essentiellement constante (qui correspond donc au choix d'une telle première fonction) est préférentiellement déterminée au préalable pour chaque régime stationnaire dont la sélection peut être fait à l'étape (0). Alternativement, et sans se départir du cadre de l'invention, pour chaque régime stationnaire, cette première fonction peut être choisie comme une fonction monotone bijective, préférentiellement affine. Dans le cas d'une « fonction affine », c'est-à-dire, une fonction f de la forme f(θ) = aθ + b où a et b sont des coefficients et θ une variable (le calage d'aubes du redresseur, dans le cas présent), une paire de coefficients (a, b) est de préférence déterminée au préalable pour chaque régime stationnaire. De façon combinée, il peut aussi être envisagé que des régimes stationnaires soient associés à une première fonction monotone bijective, de préférence affine, et d'autres tels régimes stationnaires soient associés à une première fonction constante ou essentiellement constante.

Selon un mode de réalisation très préféré de cette invention, la méthode comprend en outre l'étape suivante :
(iii) réguler un débit de carburant injecté dans la chambre de combustion en boucle fermée sur base d'un rapport de vitesses de rotation réduites des compresseurs haute et basse pression.

De préférence, lorsque la méthode comprend l'étape (0) susmentionnée, le débit de carburant injecté dans la chambre de combustion est régulé à l'étape (iii) sur base du régime stationnaire sélectionné à l'étape (0).

Il est bien connu d'un homme du métier que la « vitesse de rotation réduite » d'un compresseur (notées ci-après respectivement N1R et N2R pour les compresseurs basse et haute pression) correspond préférentiellement au quotient de la vitesse de rotation réelle du compresseur (notées ci-après respectivement N1 et N2 pour les compresseurs basse et haute pression) par la racine carrée de la température en son entrée (ci-après notées T2 et T25 pour les compresseurs basse et haute pression respectivement). En particulier, les égalités suivantes sont vérifiées : N1R = N1/√T2 et N2R = N2/√T25.

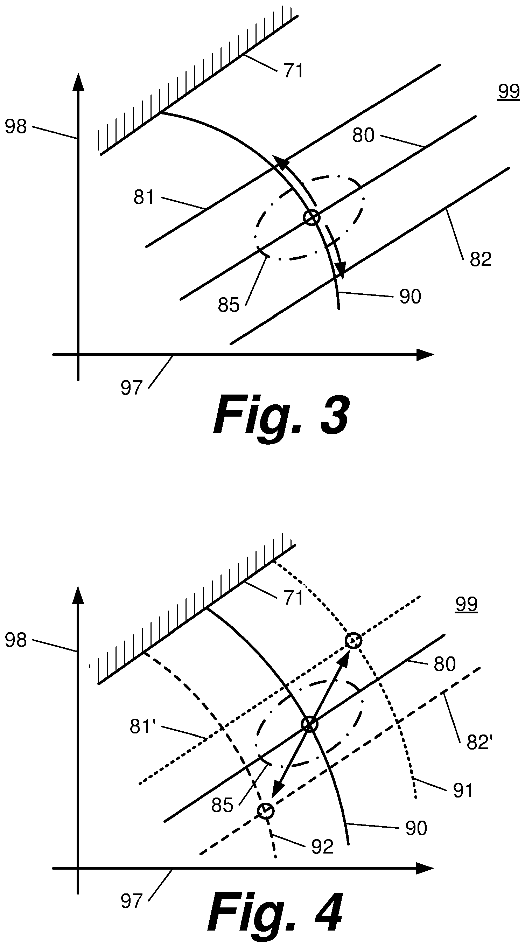

Ce mode de réalisation très préféré de la présente invention est très avantageux car il permet une régulation du débit de carburant qui est injecté dans la chambre de combustion en boucle fermée sur le rapport N2R/N1R, et ce parallèlement aux régulations des étapes (i) et (ii). Il est ainsi possible de varier ce débit de carburant pour maintenir le rapport N2R/N1R susdit, de préférence en concordance avec un régime stationnaire sélectionné à l'étape (0). La stabilisation et/ou le contrôle de ce rapport grâce à cette boucle fermée joue un rôle important car elle permet une stabilisation et/ou un contrôle du point de fonctionnement du compresseur basse pression entre ses bas rendements et sa ligne de pompage (et/ou décrochage), de façon à optimiser le rendement de ce dernier en tenant compte de ses limites de stabilité. En effet, il est connu d'un homme du métier que ce point de fonctionnement est à l'intersection, dans le champ de fonctionnement du compresseur basse pression (qui comprend les points de coordonnées (débit, taux de compression)), d'une courbe d'iso-vitesse (obtenue par la caractéristique intrinsèque de compression par débit à une vitesse de rotation donnée du compresseur basse pression), et d'une ligne de fonctionnement correspondant à un débit d'entrée du compresseur haute pression en ce point de fonctionnement (qui dépend essentiellement de la vitesse N2 ainsi que du calage des aubes des redresseurs à calage variable du compresseur haute pression). Dès lors, un désalignement entre les vitesses des compresseurs basse et haute pression par rapport à l'alignement pour lequel la turbomachine a été mis au point, peut ainsi décaler le point de fonctionnement du compresseur basse pression. Le décalage qui s'ensuit est susceptible d'orienter le compresseur basse pression vers de faibles rendements (par exemple, si le rapport N2/N1 est plus grand que prévu), ou vers une instabilité potentiellement destructrice, proche ou sur une ligne du champ de fonctionnement dite « de pompage » (ou encore « de décrochage ») comprenant des points auxquels le rendement du compresseur basse pression chute suite à un décrochage aérodynamique des aubes (par exemple, si N2/N1 est plus petit que prévu). Un tel désalignement est notamment susceptible de survenir suite aux étapes (i) et (ii) comme il sera expliqué ci-après au regard des figures 3 et 4, d'où l'importance de cette boucle fermée prévue à l'étape (iii). Celle-ci permet une stabilité et/ou un contrôle sur point de fonctionnement compresseur basse pression au meilleur compromis de rendement et de stabilité. De la même façon que pour l'étape (ii), il est implicite que cette régulation en boucle fermée nécessite une mesure régulière des paramètres N1, T2, N2, T25 susmentionnés, de préférence afin de s'assurer d'une conformité du rapport N2R/N1R avec le régime stationnaire sélectionné à l'étape (0). Il est à noter que les techniques de mesures de ces paramètres par exemple, au moyen de capteurs dédiés, sont largement connues d'un homme du métier.

Selon un mode de réalisation préféré de l'invention, le débit de carburant injecté dans la chambre de combustion est régulée à l'étape (iii) pour que ce rapport corresponde à une deuxième fonction mathématique du calage d'aubes du redresseur, la deuxième fonction dépendant du régime stationnaire sélectionné à l'étape (0). En d'autres termes à chaque régime stationnaire est préalablement associé une telle deuxième fonction sur base de laquelle le débit de carburant injecté et le rapport N2R/N1R seront régulés en boucle fermée. De préférence, pour chaque tel régime stationnaire, cette deuxième fonction est une fonction constante ou essentiellement constante de sorte que l'étape (iii) permet de maintenir un rapport N2R/N1R comme constant ou essentiellement constant, ce qui permet de stabiliser avantageusement le point de fonctionnement du compresseur basse pression proche de ses rendements maximaux sans impacter négativement l'efficacité de la régulation de la poussée. Dans ce cas, le rapport N2R/N1R (correspondant donc au choix d'une deuxième fonction) est de préférence déterminée préalablement pour chaque régime stationnaire dont la sélection peut être faite à l'étape (0). Alternativement, et sans se départir du cadre de l'invention, pour chaque régime stationnaire, la deuxième fonction peut être choisie comme une fonction monotone bijective, préférentiellement affine de la forme f(θ) = cθ + d pour (c, d) une paire de coefficients qui est de préférence déterminée au préalable pour chaque régime stationnaire. De façon combinée, il peut être envisagé que certains régimes stationnaires soient associés à une deuxième fonction monotone bijective, de préférence affine, et d'autres régimes stationnaires à une deuxième fonction constante ou essentiellement constante. De façon optionnelle, le choix d'un tel type deuxième fonction pour un régime stationnaire est indépendant du choix d'un tel type de première fonction pour ce même régime stationnaire.

La méthode selon l'invention s'applique aussi pour une turbomachine d'aéronef comprenant une pluralité d'hélices munies de pales, chacune associée à un système à calage variable de ses pales. Dans ce cas, de préférence, l'étape (ii) s'applique pour chacune des hélices au moyen du système à calage variable de pales qui lui est associé. Les paramètres pris en compte à cet effet peuvent être différents (par exemple dans le cas d'hélices contrarotatives).

Un autre objet de cette invention est de fournir un système de régulation de poussée de turbomachines d'aéronef à grand taux de dilution telles que celles qu'introduites dans la section d'art antérieur, qui permette une telle régulation suffisamment précise et efficace. Dans ce but, l'invention propose un système de régulation de poussée d'une turbomachine d'aéronef, conformément à la revendication 11, comprenant des moyens configurés pour mettre en œuvre la méthode selon l'invention. Les modes de réalisation, ainsi que les avantages de la méthode selon l'invention, et de ces modes de réalisation se transposent mutatis mutandis au système de régulation susdit. Ce dernier atteint donc en particulier ledit autre objet de l'invention.

En d'autres termes, le système de régulation selon l'invention comprend des moyens techniques pour mettre en œuvre les étapes (i) et (ii) de la méthode de régulation selon l'invention, et des moyens pour mettre en œuvre l'étape (iii) de cette même méthode lorsqu'elle en comprend. Ces moyens techniques sont de préférence avantageusement déjà présents au sein de la turbomachine d'aéronef et/ou de l'aéronef dans son ensemble. Les paragraphes ci-dessous en mentionnent des exemples non limitatifs de tels moyens et leur application préférée pour un régime stationnaire sélectionné.

Les moyens techniques pour mettre en œuvre l'étape (i) comprennent une première unité de commande configurée pour être couplée à une manette de poussée de la turbomachine et au système de calage variable d'aubes du redresseur pour commander un ajustement du calage des aubes en réponse à une action sur la manette de poussée.

Les moyens techniques pour mettre en œuvre l'étape (ii) comprennent :
- des moyens de mesure configurés pour déterminer une vitesse de rotation et un calage des pales de l'hélice, et de préférence, un calage des aubes du redresseur ;
- une première unité logique couplée à ces moyens de mesure pour :
   - recevoir des mesures de ceux-ci,
   - déterminer un ajustement éventuel du calage des pales de l'hélice sur base de ces mesures ;
- une deuxième unité de commande couplée à la première unité logique et configurée pour être couplée au système à calage variable de pales de l'hélice et pour commander ledit ajustement éventuel du calage des pales de l'hélice.

Il est à noter que les systèmes à calage variable de pales pour une hélice sont largement connues d'un homme du métier. Préférentiellement, la première unité logique est également configurée pour :
- effectuer une comparaison entre la mesure de la vitesse de rotation de l'hélice et une vitesse de rotation associée au régime stationnaire (et de préférence sur base d'une première fonction telle qu'introduite ci-dessus),
et la détermination de l'ajustement éventuel du calage des pales de l'hélice par la première unité logique est préférentiellement faite sur base de cette comparaison et de la mesure de calage des pales de l'hélice.

Préférentiellement, les moyens techniques pour mettre en œuvre l'étape (iii) comprennent :
- des moyens de mesure configurés pour déterminer une vitesse de rotation (N1, N2) et une température en entrée (T2, T25) de chacun des compresseurs basse et haute pression, ainsi qu'une mesure de débit de carburant injecté dans la chambre de combustion, et de façon préférée, un calage des aubes du redresseur ;
- une deuxième unité logique couplée à ces moyens de mesure pour :
   - recevoir des mesures de ceux-ci et calculer le rapport N2R/N1R,
   - effectuer une comparaison entre le rapport N2R/N1R calculé, et ce même rapport associé au régime stationnaire (et de préférence sur base d'une deuxième fonction telle qu'introduite ci-dessus),
   - déterminer un ajustement éventuel du débit de carburant à injecter dans la chambre de combustion sur base de cette comparaison et de la mesure de ce débit ;
- une troisième unité de commande couplée à la deuxième unité logique et configurée pour être couplée à un injecteur de carburant dans la chambre de combustion et pour commander ledit ajustement éventuel du débit de carburant.

De façon plus générale, les étapes (i), (ii) et (iii) de la méthode peuvent être mise en œuvre dans des circuits matériels dédiés et/ou via des outils logiciels connus d'un homme du métier. De façon très avantageuse, dans les exemples préférés susmentionnés, le système selon l'invention tire pleinement profit des infrastructures déjà existantes (dédiées ou non) telles que le FADEC, la manette de poussée ou encore des capteurs de mesure des vitesses de rotation et de températures au niveau des compresseurs basse et haute pression, et ce sans nécessité d'onéreuses et complexes modifications de la turbomachine d'aéronef.

L'invention propose aussi une turbomachine d'aéronef munie du système de régulation selon l'invention. En particulier, cette turbomachine est d'un taux de dilution préféré d'au moins 20, optionnellement, d'au moins 30. Elle comprend :
- (au moins) une hélice comprenant une pluralité de pales,
- un système à calage variable des pales ;
- successivement le long d'un axe moteur de la turbomachine :
   - un compresseur basse pression comprenant au moins un redresseur muni d'un système à calage variable d'aubes configuré pour modifier une orientation d'aubes du redresseur,
   - un compresseur haute pression,
   - une chambre de combustion,
   - au moins une turbine, préférentiellement une turbine basse pression et une turbine haute pression ;

Cette turbomachine d'aéronef est d'un taux de dilution préféré d'au moins 20, optionnellement, d'au moins 30. De préférence, l'hélice et le compresseur basse pression sont reliés par l'intermédiaire d'un réducteur, de sorte que les vitesses de rotation de l'hélice et du compresseur basse pression sont proportionnelles. De façon préférée, le réducteur est tel que le rapport de ces vitesses est variable et/ou contrôlable.

Dans le cas préféré des moyens technique susmentionnés pour mettre en œuvre les étapes (i), (ii) et/ou (iii), respectivement, et de façon effective, la première unité de commande est couplée à la manette de poussée de la turbomachine et au système de calage variable d'aubes du redresseur, la deuxième unité de commande est couplée au système à calage variable de pales de l'hélice, et/ou la troisième unité de commande est couplée audit injecteur de carburant.

Tous les modes de réalisation du système de régulation selon l'invention ainsi que leurs avantages se transposent mutatis mutandis à la présente turbomachine. De préférence, elle consiste en un parmi :
- un turboréacteur à double flux, l'hélice étant carénée ;
- un propulseur à rotor ouvert, l'hélice étant non carénée.

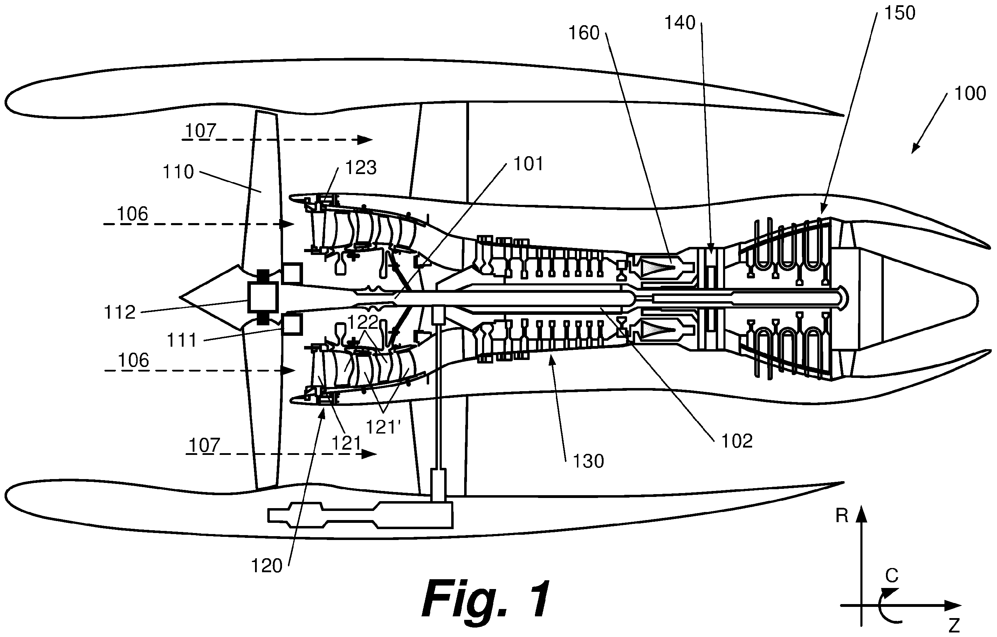

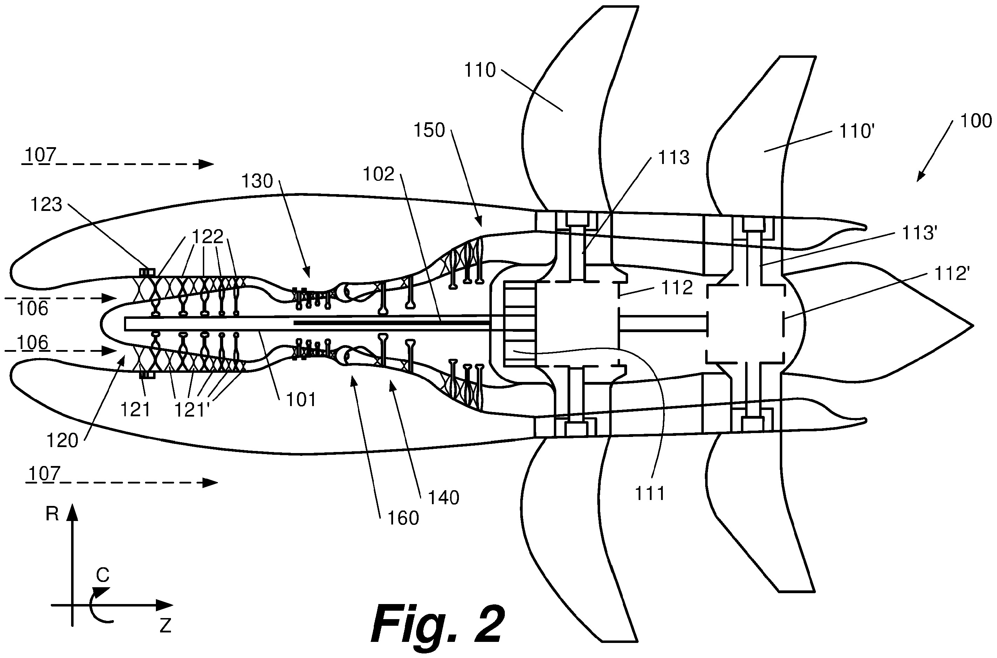

Ces hélices sont préférentiellement rapides dans le sens où elles peuvent atteindre des vitesses de l'ordre de 0,8 Mach. Par exemple, et tel que discuté dans l'art antérieur, un tel turboréacteur à double flux est un turboréacteur UHBR et un tel propulseur à rotor ouvert est un propulseur CROR. Ces exemples sont présentés en figures 1 et 2 ci-après introduites.

### Brève description des figures

D'autres caractéristiques et avantages de la présente invention apparaîtront à la lecture de la description détaillée qui suit pour la compréhension de laquelle on se reportera aux figures annexées parmi lesquelles :
- chacune des figures 1 et 2 illustre une vue schématique et simplifiée d'une coupe bidimensionnelle d'un mode de réalisation préféré d'une turbomachine d'aéronef sur laquelle il est prévu d'intégrer le système de régulation selon l'invention ;
- chacune des figures 3 et 4 illustrent un champ de fonctionnement d'un compresseur basse pression d'une turbomachine d'aéronef ;

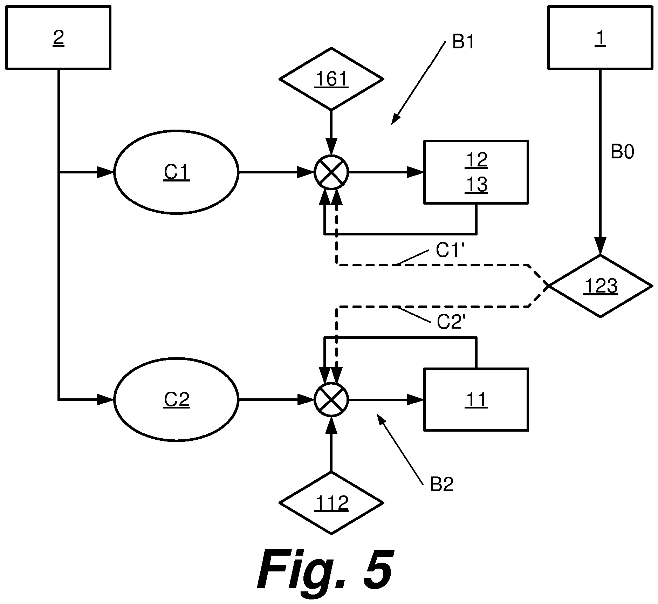

- la figure 5 illustre schématiquement un mode de réalisation préféré de la méthode de régulation selon l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

Dans le cas de ce document, « une hélice d'une turbomachine d'aéronef » désigne tant une hélice carénée qu'une hélice non carénée. Tel que rappelé dans l'art antérieur, une « soufflante » à calage (ou à pas) variable, de grande dimension est présentement considérée comme une « hélice carénée ». Cette partie du texte présente une description détaillée de modes de réalisation préférés de la présente invention. Cette dernière est décrite avec des réalisations particulières et des références à des figures mais l'invention n'est pas limitée par celles-ci. Les dessins et/ou figures décrits ci-dessous ne sont que schématiques et ne sont pas limitants.

Des références sont représentées sur certaines de ces figures comme repères géométriques abstraits essentiellement afin de quantifier et/ou visualiser des propriétés de modes de réalisation de l'invention. La référence Z désigne, par exemple, généralement l'« axe moteur » de la turbomachine d'aéronef. Celui-ci est dirigé d'« amont » en « aval ». Les étages des compresseurs et des turbines de la turbomachine d'aéronef sont empilés essentiellement le long de cet axe moteur. Les termes « en entrée » et « en sortie » d'un compresseur font référence aux extrémités respectivement amont et aval du compresseur. Dans le cadre de ce document, il est fait référence aux directions « axiale », « circonférentielle » et « radiale » correspondant préférentiellement et respectivement en des directions parallèle à l'axe moteur, essentiellement circulaire autour de l'axe moteur, et direction perpendiculaire à l'axe moteur. Des repères aux figures 1 et 2 illustrent ces directions (munies d'un sens) respectivement notées Z, R et C. La direction et le sens de l'axe moteur et du vecteur Z correspondent. Les termes « axialement » et « radialement » sont dérivés respectivement des termes « axial » et « radial » avec une signification préférée analogue. Les termes « circonférentielle » et « radiale » font de préférence référence à un système de coordonnées polaires connu d'un homme du métier dans chaque plan perpendiculaire à l'axe moteur.

Les figures 1 et 2 illustrent des coupes de deux turbomachines d'aéronef 100 axiales sur lesquelles il est prévu de réguler la poussée par la méthode selon la présente invention. Chacune de ces turbomachines 100 comprend une hélice 110 munies d'une pluralité de pales, associée à un système 112 à calage variable des pales, et successivement le long de l'axe moteur (parallèlement à l'axe Z), un compresseur basse pression 120, un compresseur haute pression 130, une chambre de combustion 160, une turbine haute pression 140 ainsi qu'une turbine basse pression 150. Ces éléments sont connus d'un homme du métier. En fonctionnement, la puissance mécanique des turbines basse 150 et haute 140 pression est transmise par l'intermédiaire des arbres basse 101 et haute 102 pression aux compresseurs basse 120 et haute 130 pression respectivement, ainsi qu'à l'hélice 110 via l'arbre basse pression 101 par l'intermédiaire d'un réducteur 111 interposé, de sorte que les vitesses de rotation de l'hélice 110 et du compresseur basse pression 120 soient proportionnelles. Bien que non référencés sur les figures 1 et 2 de façon systématique, chaque compresseur 120, 130 et chaque turbine 140, 150 comprend au moins un étage, chaque tel étage comprenant un aubage fixe et un aubage mobile apte à être mis en rotation autour de l'axe moteur. Pour le compresseur basse pression 120, ces aubages fixes et mobiles sont notés 121-121' et 122 respectivement. Les aubages fixes des compresseurs 120, 130 sont généralement appelés « redresseurs ». Les aubages mobiles et fixes des étages d'un tel compresseur 120, 130 sont alternés le long de l'axe moteur. Des paramètres tels que les dimensions et la géométrie de surface des aubes sont déterminés pour que les conditions de fonctionnement de chaque étage soient adaptées à celles des étages en amont et/ou en aval le long de l'axe moteur. En particulier, les aubages mobiles apportent une énergie en augmentant la vitesse relative de l'écoulement d'un flux d'air traversant le compresseur 120, 130, tandis que les redresseurs ramènent l'écoulement parallèlement à l'axe moteur tout en augmentant la pression et en diminuant la vitesse absolue de l'écoulement. Chaque aube fixe a un profil aérodynamique donné et présente un angle de calage par rapport à l'axe moteur pour imposer un sens d'écoulement. Les compresseurs basse 120 et haute 130 pression permettent ainsi d'aspirer et de comprimer de façon synergique de l'air de façon à l'amener à des vitesse, pression et température adaptées à l'entrée de la chambre de combustion 160. Ces notions sont connues d'un homme du métier. Un ou plusieurs redresseurs des compresseurs 120, 130 sont munis d'un système à calage variable de leurs aubes pour optimiser l'écoulement du flux d'air entre des étages de ces compresseurs 120, 130. De façon analogue, le système 112 à calage variable de pales couplé à l'hélice 110 permet de modifier l'orientation du profil des pales et donc le pas de cette hélice 110, et ce pour obtenir un bon fonctionnement de la turbomachine d'aéronef 100 selon les différentes phases de vol rencontrée. Tel qu'il est bien connu d'un homme du métier, chacun des systèmes à calage variable d'aubes de redresseurs susdits comprend de préférence un anneau (dit « VSV ») couplé mécaniquement aux aubes et ajusté de façon circonférentielle et extérieurement autour d'un carter du compresseur 120, 130 associé, et une unité de déplacement, typiquement au moins un vérin, pour déplacer cet anneau, et modifier en conséquence de façon synchronisée le calage des aubes du redresseur. Suivant les figures 1 et 2, le compresseur basse pression 120 comprend au moins un redresseur 121 (dit plus simplement « le redresseur 121 » dans la suite) muni d'un tel système à calage variable référencé par 123. Ce redresseur 121 est préférentiellement en amont du compresseur basse pression 120. La représentation de la figure 1 n'est pas limitative du cas où un ou plusieurs des autres redresseurs 121' serait aussi muni d'un tel système à calage variable. Pour chacune des turbomachines d'aéronef 100 illustrées en figure 1 et 2, un flux d'air chaud, appelé flux primaire 106, traverse la turbomachine d'aéronef 100 axialement, alimentant par cette occasion la chambre de combustion 160, alors qu'un flux d'air froid, appelé flux secondaire 107, est principalement destiné à générer une réaction de poussée nécessaire au vol de l'aéronef. Ce flux secondaire 107 est accéléré par l'hélice 110 sans traverser la chambre de combustion 160. Le rapport des flux massiques secondaire 107 et principal 106 est appelé taux de dilution. Dans le cas de l'invention, il est de préférence égal à 20 ou plus car l'hélice 110 est de préférence de grande dimension.

L'hélice 110 de la turbomachine d'aéronef 100 illustrée en figure 1 est carénée et typiquement appelée soufflante. Elle permet la génération des flux primaire 106 et secondaire 107 en amont du compresseur basse pression 120. Cette turbomachine d'aéronef 100 est préférentiellement un turboréacteur de type UHBR.

La turbomachine d'aéronef 100 représentée en figure 2 est un propulseur CROR de la classe des propulseurs « open rotor ». L'hélice 110 est non carénée. Ce propulseur comprend en outre une deuxième hélice 110' non carénée et munie de pales. Dans le cadre du mode de réalisation présenté, ces hélices 110, 110' sont contrarotatives. Le cas où l'une de ces hélices 110, 110' serait fixe n'est cependant pas exclus de l'invention. Comme ces hélices ne sont pas carénées, elles peuvent être facilement dimensionné de façon à accélérer un très grand flux massique secondaire 107. Chaque hélice 110, 110' est couplée à un système 112, 112' à calage variable de ses pales et à l'arbre basse pression 101 par des bras mécaniques 113, 113' s'étendant essentiellement radialement. La méthode selon l'invention s'applique préférentiellement à chacune de ces hélices 110, 110' avec son calage variable de pales associé 112, 112'.

Cette invention propose de réguler la poussée de turbomachines d'aéronef 100 telles qu'illustrée aux figures 1 et 2 au moyen de la méthode de régulation selon l'invention. Celle-ci est illustrée en figure 5, et commentée ci-dessous pour une exécution préférée en régime stationnaire. La méthode peut être implémentée par un système de régulation tel qu'introduit dans l'exposé de l'invention. Conformément aux étapes (i) et (ii), la méthode propose :
- une boucle ouverte B0 pour réguler la poussée (actionnable directement par une manette 1 de poussée, par exemple, par un pilote) au moyen du système 123 à calage variable d'aubes sur base du calage des aubes du redresseur 121 ;
- une boucle fermée B2 pour réguler le calage des pales de l'hélice 110 au moyen du système 112 à calage variable de pales sur base d'une vitesse de rotation de l'hélice 110.

Cette boucle fermée B2 est fonction du régime stationnaire sélectionné sur base du dispositif approprié 2 dans la turbomachine d'aéronef, au sens où, ce régime est préférentiellement associé au préalable à une vitesse de rotation de l'hélice 110 à maintenir comme constante ou proche de constante. Ceci définit une condition notée C2 pour la boucle fermé B2. Typiquement, des moyens 11 de mesures de cette vitesse de rotation sont adjoints. De façon optionnelle, cette condition C2 est remplacée et/ou complémentée (selon le régime stationnaire considéré) par une condition C2' associée au régime stationnaire choisi et à une première fonction monotone et bijective du calage des aubes du redresseur 121 de façon à imposer une certaine vitesse de rotation de l'hélice 110.

Très préférentiellement, la méthode prévoit une boucle fermée B1 pour réguler aussi le débit de carburant injecté dans la chambre de combustion 160 sur le rapport N2R/N1R des vitesses de rotation réduites des compresseurs haute 130 et basse 120 pression. Cette boucle fermée B1 est fonction du régime stationnaire sélectionné sur base du dispositif approprié 2 dans la turbomachine d'aéronef, au sens où, de préférence, ce régime est préalablement associé à un tel rapport N2R/N1R à maintenir comme constant ou proche de constant. Ceci définit une condition notée C1 régulant la boucle fermé B1. Typiquement, des moyens 12, 13 de mesures des vitesses de rotation N1, N2, et des températures T2, T25 en entrée des compresseurs basse 120 et haute 130 pression sont adjoints respectivement. De façon optionnelle, la condition C1 est remplacée et/ou complémentée (selon le régime stationnaire considéré) par une condition C1' associée au régime stationnaire choisi et à une deuxième fonction monotone et bijective du calage des aubes du redresseur 121 de façon à imposer un certain rapport N2R/N1R.

Cette boucle fermée B1 susdite compose l'étape (iii) préféré de la méthode selon l'invention. Elle permet de stabiliser, ou à tout de moins de maîtriser, le point de fonctionnement du compresseur basse pression 120 au meilleur compromis de rendement et de stabilité. En effet, comme illustré aux figues 3 et 4 respectivement, les étapes (ii) et (i) de la méthode sont susceptibles d'amener un glissement de ce point de fonctionnement soit vers des rendements bas, soit vers une certaine instabilité. De façon plus précise, chacune de ces figures illustre le champ de fonctionnement 99 du compresseur basse pression 120, muni d'un repère d'axes 97 et 98 correspondant respectivement au débit (optionnellement réduit) et au taux de compression du compresseur basse pression 120. La ligne de pompage 71 définit et/ou estime une limite de stabilité de ce dernier. Il convient de garder une marge (dite marge au pompage) entre cette ligne de pompage 71 et le point de fonctionnement du compresseur basse pression 120, et ce notamment compte tenu des incertitudes sur la mesure des paramètres de fonctionnement de ce dernier. Un point de fonctionnement nominal et/ou désiré est à l'intersection d'une courbe 90 d'iso-vitesse et d'une ligne de fonctionnement 80 correspondant à un débit en l'entrée du compresseur haute pression 130 (c'est-à-dire, essentiellement, à un débit en la sortie du compresseur basse pression 120). Ce point de fonctionnement est situé dans une zone 85 de rendement optimaux du compresseur basse pression 120, à une marge suffisante de la ligne de pompage 71.

La figure 3 illustre l'impact qu'une variation du calage de pales de l'hélice 110 est susceptible d'avoir sur le point de fonctionnement du compresseur basse pression 120 pour vitesse de rotation de l'hélice 110 conservée. Une telle variation modifie le besoin de puissance sur l'arbre basse pression 101 de la turbomachine d'aéronef 100, et en conséquence la vitesse de rotation du compresseur haute pression 130. D'une part, si le calage des pales de l'hélice 110 s'ouvre par rapport à une position initiale, le compresseur haute pression 130 est accéléré, ce qui se traduit par une translation de la ligne de fonctionnement du compresseur basse pression 120 vers la ligne 82. Le compresseur basse pression 120 évolue alors vers des plus bas rendements. D'autre part, si le calage des pales de l'hélice 110 se ferme par rapport à cette position initiale, le compresseur haute pression 130 est ralenti, ce qui se traduit par une translation de la ligne de fonctionnement du compresseur basse pression 120 vers la ligne 81. Le compresseur basse pression 120 évolue alors vers sa limite de stabilité.

La figure 4 illustre l'impact d'une variation du calage des aubes du redresseur 121 sur le point de fonctionnement du compresseur basse pression 120. De la même façon que ci-dessus, cette variation impacte la vitesse de rotation du compresseur haute pression 130. D'une part, si le calage des aubes du redresseur 121 s'ouvre par rapport à une position initiale de façon à accroître le débit d'air, le compresseur haute pression 130 est ralenti, ce qui translate le point de fonctionnement à l'intersection de la ligne de fonctionnement 81' et de la courbe d'iso-vitesse 91 (qui correspond à la même vitesse que la courbe 90 pour le calage des aubes du redresseur 121 susdit). Le compresseur basse pression 120 évolue alors vers sa limite de stabilité. D'autre part, si le calage des aubes du redresseur 121 se ferme par rapport à cette position initiale de façon à diminuer le débit d'air, le compresseur haute pression 130 est accéléré, ce qui translate le point de fonctionnement à l'intersection de la ligne de fonctionnement 82' et de la courbe d'iso-vitesse 92 (qui correspond à la même vitesse que la courbe 90 pour le calage des aubes du redresseur 121 susdit). Le compresseur basse pression 120 évolue alors vers des plus bas rendements.

En résumé, la présente invention concerne une méthode et un système de régulation de poussée d'une turbomachine d'aéronef 100 à grand taux de dilution, de préférence en régime stationnaire, par une action directe sur un système 123 à calage variable d'aubes d'un redresseur 121 d'un compresseur basse pression 120.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Méthode de régulation de poussée d'une turbomachine d'aéronef (100), pour une turbomachine d'aéronef (100) comprenant :
- une hélice (110) comprenant une pluralité de pales;
- un système (112) à calage variable desdites pales ;
- successivement le long d'un axe moteur :
• un compresseur basse pression (120) comprenant au moins un redresseur (121) muni d'un système (123) à calage variable d'aubes pour modifier une orientation d'aubes du redresseur (121),
• un compresseur haute pression (130),
• une chambre de combustion (160),
• une ou plusieurs turbines (140, 150) ;
la méthode étant **caractérisée en ce qu'**elle comprend les étapes suivantes :
(i) faire varier un calage d'aubes du redresseur (121) au moyen du système (123) à calage variable d'aubes pour réguler en boucle ouverte (B0) la poussée de la turbomachine (100) ;
(ii) réguler un calage de pales de l'hélice (110) en boucle fermée (B2) sur base d'une vitesse de rotation de l'hélice (110), au moyen du système (112) à calage variable de pales.

2. Méthode selon la revendication précédente, **caractérisée en ce qu'**elle comprend en outre l'étape (0) suivante qui précède les étapes (i) et (ii) :
(0) sélectionner un régime stationnaire pour la turbomachine d'aéronef (100) ;
le calage de pales de l'hélice (110) étant régulé à l'étape (ii) sur base du régime stationnaire sélectionné à l'étape (0).

3. Méthode selon la revendication précédente, **caractérisée en ce que** le calage de pales de l'hélice (110) est régulé à l'étape (ii) pour que la vitesse de rotation de l'hélice (110) corresponde à une première fonction mathématique du calage d'aubes du redresseur (121), la première fonction dépendant du régime stationnaire sélectionné à l'étape (0).

4. Méthode selon la revendication précédente, **caractérisée en ce que** la première fonction est une parmi :
- une fonction essentiellement constante,
- une fonction monotone bijective, préférentiellement affine.

5. Méthode selon l'une quelconque des revendications précédentes, comprenant en outre l'étape suivante :
(iii) réguler un débit de carburant injecté dans la chambre de combustion (160) en boucle fermée (B1) sur base d'un rapport de vitesses de rotation réduites des compresseurs haute (130) et basse (120) pression.

6. Méthode selon la revendication précédente lorsqu'elle dépend de l'une quelconque des revendications 2 à 4, **caractérisée en ce que** le débit de carburant injecté dans la chambre de combustion (160) est régulé à l'étape (iii) sur base du régime stationnaire sélectionné à l'étape (0).

7. Méthode selon la revendication précédente, **caractérisée en ce que** le débit de carburant injecté dans la chambre de combustion (160) est régulé à l'étape (iii) pour que ledit rapport corresponde à une deuxième fonction mathématique du calage d'aubes du redresseur (121), la deuxième fonction dépendant du régime stationnaire sélectionné à l'étape (0).

8. Méthode selon la revendication précédente, **caractérisée en ce que** la deuxième fonction est une parmi :
- une fonction essentiellement constante,
- une fonction monotone bijective, préférentiellement affine.

9. Méthode selon l'une quelconque des revendications précédentes, **caractérisée en ce que** la turbomachine d'aéronef (100) est d'un taux de dilution d'au moins 20.

10. Méthode selon l'une quelconque des revendications précédentes, **caractérisée en ce que** la turbomachine d'aéronef (100) comprend une pluralité d'hélices (110, 110') munies de pales, chacune associée à un système (112, 112') à calage variable de ses pales, et **en ce que** l'étape (ii) s'applique pour chacune des hélices (110, 110') au moyen du système (112, 112') à calage variable de pales qui lui est associé.

11. Système de régulation de poussée d'une turbomachine d'aéronef (100) **caractérisé en ce qu'**il comprend des moyens configurés pour mettre en œuvre la méthode selon l'une quelconque des revendications précédentes, comprenant :
• des moyens techniques pour mettre en œuvre l'étape (i) comprenant une première unité de commande configurée pour être couplée à une manette de poussée de la turbomachine et au système de calage variable d'aubes du redresseur pour commander un ajustement du calage des aubes en réponse à une action sur la manette de poussée ;
• des moyens techniques pour mettre en œuvre l'étape (ii) comprenant :
- des moyens de mesure configurés pour déterminer une vitesse de rotation et un calage des pales de l'hélice, et de préférence, un calage des aubes du redresseur ;
- une première unité logique couplée à ces moyens de mesure pour :
o recevoir des mesures de ceux-ci,
o déterminer un ajustement éventuel du calage des pales de l'hélice sur base de ces mesures ;
- une deuxième unité de commande couplée à la première unité logique et configurée pour être couplée au système à calage variable de pales de l'hélice et pour commander ledit ajustement éventuel du calage des pales de l'hélice.

12. Turbomachine d'aéronef (100) comprenant :
- une hélice (110) comprenant une pluralité de pales;
- un système (112) à calage variable desdites pales ;
- successivement le long d'un axe moteur :
• un compresseur basse pression (120) comprenant au moins un redresseur (121) muni d'un système (123) à calage variable d'aubes pour modifier une orientation d'aubes du redresseur (121),
• un compresseur haute pression (130),
• une chambre de combustion (160),
• une ou plusieurs turbines (140, 150) ;
**caractérisée en ce qu'**elle comprend le système de régulation selon la revendication précédente.

13. Turbomachine d'aéronef (100) selon la revendication précédente, **caractérisée en ce que** l'hélice (110) et le compresseur basse pression (120) sont reliés par l'intermédiaire d'un arbre basse pression (101) et d'un réducteur (111), de sorte que les vitesses de rotation de l'hélice (110) et du compresseur basse pression (120) sont proportionnelles.

14. Turbomachine d'aéronef (100) selon la revendication 13, **caractérisée en ce qu'**elle consiste en un turboréacteur à double flux, l'hélice (110) étant carénée.

15. Turbomachine d'aéronef (100) selon la revendication 13, **caractérisée en ce qu'**elle consiste en un propulseur à rotor ouvert, l'hélice (110) étant non carénée.

## Patentansprüche

1. Verfahren zum Regeln des Schubs eines Luftfahrzeug-Turbotriebwerks (100) für ein Luftfahrzeug-Turbotriebwerk (100), welches umfasst:
- eine Schraube (110), die eine Vielzahl von Blättern umfasst;
- ein System (112) mit variabler Feststellposition der Blätter;
- nacheinander entlang einer Motorachse:
• einen Niederdruckkompressor (120), der mindestens einen Gleichrichter (121) umfasst, der mit einem System (123) mit variabler Schaufelfeststellposition versehen ist, um eine Schaufelausrichtung des Gleichrichters (121) zu modifizieren,
• einen Hochdruckkompressor (130),
• eine Brennkammer (160),
• eine oder mehrere Turbinen (140, 150);
wobei das Verfahren **dadurch gekennzeichnet ist, dass** es die folgenden Schritte umfasst:
(i) Variieren einer Schaufelfeststellposition des Gleichrichters (121) mittels des Systems (123) mit variabler Schaufelfeststellposition, um den Schub des Turbotriebwerks (100) in einem offenen Regelkreis (B0) zu regeln;
(ii) Regeln einer Blattfeststellposition der Schraube (110) in einem geschlossenen Regelkreis (B2) auf Basis einer Drehzahl der Schraube (110) mittels des Systems (112) mit variabler Blattfeststellposition.

2. Verfahren nach dem vorstehenden Anspruch, **dadurch gekennzeichnet, dass** es weiter den folgenden Schritt (0) umfasst, der den Schritten (i) und (ii) vorausgeht:
(0) Auswählen eines stationären Laufs für das Luftfahrzeug-Turbotriebwerk (100);
wobei die Blattfeststellposition der Schraube (110) in Schritt (ii) auf Basis des in Schritt (0) ausgewählten stationären Laufs geregelt wird.

3. Verfahren nach dem vorstehenden Anspruch, **dadurch gekennzeichnet, dass** die Blattfeststellposition der Schraube (110) in Schritt (ii) so geregelt wird, dass die Drehzahl der Schraube (110) einer ersten mathematischen Funktion der Schaufelfeststellposition des Gleichrichters (121) entspricht, wobei die erste Funktion von dem in Schritt (0) ausgewählten stationären Lauf abhängt.

4. Verfahren nach dem vorstehenden Anspruch, **dadurch gekennzeichnet, dass** die erste Funktion eine ist aus:
- einer im Wesentlichen konstanten Funktion,
- einer bijektiven monotonen, bevorzugt affinen, Funktion.

5. Verfahren nach einem der vorstehenden Ansprüche, das weiter den folgenden Schritt umfasst:
(iii) Regeln einer in die Brennkammer (160) eingespritzten Kraftstoffmenge in einem geschlossenen Regelkreis (B1) auf Basis eines Verhältnisses von reduzierten Drehzahlen des Hoch- (130) und des Niederdruckkompressors (120).

6. Verfahren nach dem vorstehenden Anspruch in Abhängigkeit von einem der Ansprüche 2 bis 4, **dadurch gekennzeichnet, dass** die in die Brennkammer (160) eingespritzte Kraftstoffmenge in Schritt (iii) auf Basis des in Schritt (0) ausgewählten stationären Laufs geregelt wird.

7. Verfahren nach dem vorstehenden Anspruch, **dadurch gekennzeichnet, dass** die in die Brennkammer (160) eingespritzte Kraftstoffmenge in Schritt (iii) so geregelt wird, dass das Verhältnis einer zweiten mathematischen Funktion der Schaufelfeststellposition des Gleichrichters (121) entspricht, wobei die zweite Funktion von dem in Schritt (0) ausgewählten stationären Lauf abhängt.

8. Verfahren nach dem vorstehenden Anspruch, **dadurch gekennzeichnet, dass** die zweite Funktion eine ist aus:
- einer im Wesentlichen konstanten Funktion,
- einer bijektiven monotonen, bevorzugt affinen, Funktion.

9. Verfahren nach einem der vorstehenden Ansprüche, **dadurch gekennzeichnet, dass** das Luftfahrzeug-Turbotriebwerk (100) einen Verdünnungsgrad von mindestens 20 aufweist.

10. Verfahren nach einem der vorstehenden Ansprüche, **dadurch gekennzeichnet, dass** das Luftfahrzeug-Turbotriebwerk (100) eine Vielzahl von Schrauben (110, 110') umfasst, die mit Blättern versehen sind, die jeweils einem System (112, 112') mit variabler Feststellposition ihrer Blätter zugeordnet sind, und dadurch, dass Schritt (ii) für jede der Schrauben (110, 110') mittels des Systems (112, 112') mit variabler Blattfeststellposition, das ihr zugeordnet ist, angewendet wird.

11. System zum Regeln des Schubs eines Luftfahrzeug-Turbotriebwerks (100), **dadurch gekennzeichnet, dass** es Mittel umfasst, die dafür konfiguriert sind, das Verfahren nach einem der vorstehenden Ansprüche umzusetzen, umfassend:
• technische Mittel, um Schritt (i) umzusetzen, umfassend eine erste Steuereinheit, die dafür konfiguriert ist, mit einem Schubhebel des Turbotriebwerks und dem System mit variabler Schaufelfeststellposition des Gleichrichters gekoppelt zu werden, um in Reaktion auf eine Betätigung des Schubhebels eine Anpassung der Feststellposition der Schaufeln zu steuern;
• technische Mittel, um Schritt (ii) umzusetzen, umfassend:
- Messmittel, die dafür konfiguriert sind, eine Drehzahl und eine Feststellposition der Blätter der Schraube, und bevorzugt eine Feststellposition der Schaufeln des Gleichrichters, zu bestimmen;
- eine erste Logikeinheit, die mit diesen Messmitteln gekoppelt ist, um:
Messungen von diesen zu empfangen,
auf Basis dieser Messungen eine eventuelle Anpassung der Feststellposition der Blätter der Schraube zu bestimmen;
- eine zweite Steuereinheit, die mit der ersten Logikeinheit gekoppelt und dafür konfiguriert ist, mit dem System mit variabler Blattfeststellposition der Schraube gekoppelt zu werden und die eventuelle Anpassung der Feststellposition der Blätter der Schraube zu steuern.

12. Luftfahrzeug-Turbotriebwerk (100), umfassend:
- eine Schraube (110), die eine Vielzahl von Blättern umfasst;
- ein System (112) mit variabler Feststellposition der Blätter;
- nacheinander entlang einer Motorachse:
• einen Niederdruckkompressor (120), der mindestens einen Gleichrichter (121) umfasst, der mit einem System (123) mit variabler Schaufelfeststellposition versehen ist, um eine Schaufelausrichtung des Gleichrichters (121) zu modifizieren,
• einen Hochdruckkompressor (130),
• eine Brennkammer (160),
• eine oder mehrere Turbinen (140, 150);
**dadurch gekennzeichnet, dass** es das Regelsystem nach dem vorstehenden Anspruch umfasst.

13. Luftfahrzeug-Turbotriebwerk (100) nach dem vorstehenden Anspruch, **dadurch gekennzeichnet, dass** die Schraube (110) und der Niederdruckkompressor (120) mittels einer Niederdruckwelle (101) und eines Untersetzungsgetriebes (111) so verbunden sind, dass die Drehzahlen der Schraube (110) und des Niederdruckkompressors (120) proportional sind.

14. Luftfahrzeug-Turbotriebwerk (100) nach Anspruch 13, **dadurch gekennzeichnet, dass** es aus einem Mantelstromtriebwerk besteht, wobei die Schraube (110) ummantelt ist.

15. Luftfahrzeug-Turbotriebwerk (100) nach Anspruch 13, **dadurch gekennzeichnet, dass** es aus einem Antrieb mit offenem Rotor besteht, wobei die Schraube (110) nicht ummantelt ist.

## Claims

1. A method for regulating the thrust of an aircraft turbomachine (100), for an aircraft turbomachine (100) comprising:
- a propeller (110) comprising a plurality of blades;
- a blade variable pitch setting system (112) for varying the pitch of said blades;
- successively along an engine axle:
• a low-pressure compressor (120) comprising at least one straightener (121) equipped with a vane variable pitch setting system (123) for changing an orientation of vanes of the straightener (121),
• a high-pressure compressor (130),
• a combustion chamber (160),
• one or more turbines (140, 150);
the method being **characterised in that** it comprises the following steps:
(i) varying a pitch setting of vanes of the straightener (121) by means of the vane variable pitch setting system (123) to regulate in an open loop (B0) the thrust of the turbomachine (100);
(ii) regulating a pitch setting of blades of the propeller (110) in a closed loop (B2) based on a rotational speed of the propeller (110), by means of the blade variable pitch setting system (112).

2. The method according to the preceding claim, **characterised in that** it further comprises the following step (0) which precedes the steps (i) and (ii):
(0) selecting a steady regime for the aircraft turbomachine (100); the pitch setting of blades of the propeller (110) being regulated at step (ii) based on the steady regime selected at step (0).

3. The method according to the preceding claim, **characterised in that** the pitch setting of blades of the propeller (110) is regulated at step (ii) so that the rotational speed of the propeller (110) corresponds to a first mathematical function of the pitch setting of vanes of the straightener (121), the first function depending on the steady regime selected at step (0).

4. The method according to the preceding claim, **characterised in that** the first function is one of:
- a substantially constant function,
- a bijective monotonic function, preferably affine.

5. The method according to any of the preceding claims, further comprising the following step:
(iii) regulating a fuel flow rate injected into the combustion chamber (160) in a closed loop (B1) based on a ratio of reduced rotational speeds of the high (130) and low (120) pressure compressors.

6. The method according to the preceding claim when dependent on any of claims 2 to 4, **characterised in that** the flow rate of fuel injected into the combustion chamber (160) is regulated at step (iii) on the basis of the steady regime selected at step (0).

7. The method according to the preceding claim, **characterised in that** the flow rate of fuel injected into the combustion chamber (160) is regulated at step (iii) so that said ratio corresponds to a second mathematical function of the pitch setting of vanes of the straightener (121), the second function depending on the steady regime selected at step (0).

8. The method according to the preceding claim, **characterised in that** the second function is one of:
- a substantially constant function,
- a bijective monotonic function, preferably affine.

9. The method according to any of the preceding claims, **characterised in that** the aircraft turbomachine (100) is of a bypass ratio of at least 20.

10. The method according to any one of the preceding claims, **characterised in that** the aircraft turbomachine (100) comprises a plurality of propellers (110, 110') equipped with blades, each associated with a blade variable pitch setting system (112, 112') for varying the pitch of its blades, and **in that** the step (ii) applies for each of the propellers (110, 110') by means of the blade variable pitch setting system (112, 112') associated to it.

11. A system for regulating the thrust of an aircraft turbomachine (100) **characterised in that** it comprises means configured for implementing the method according to any of the preceding claims, comprising:
• technical means for implementing the step (i) comprising a first control unit configured to be coupled to a thrust lever of the turbomachine and to the vane variable pitch setting system for varying the pitch of vanes of the straightener to control an adjustment of the pitch setting of the vanes in response to an action on the thrust lever;
• technical means for implementing the step (ii) comprising:
- measuring means configured to determine a rotational speed and a pitch setting of the blades of the propeller, and preferably a pitch setting of the vanes of the straightener;
- a first logic unit coupled to these measuring means for:
o receiving measurements from them,
o determining a possible adjustment of the pitch setting of the blades of the propeller on the basis of these measurements;
- a second control unit coupled to the first logic unit and configured to be coupled to the blade variable pitch setting system for varying the pitch of blades of the propeller and to control said eventual adjustment of the pitch setting of the blades of the propeller.

12. An aircraft turbomachine (100) comprising:
- a propeller (110) comprising a plurality of blades;
- a blade variable pitch setting system (112) for varying the pitch of said blades;
- successively along an engine axle:
• a low-pressure compressor (120) comprising at least one straightener (121) equipped with a vane variable pitch setting system (123) for changing an orientation of vanes of the straightener (121),
• a high-pressure compressor (130),
• a combustion chamber (160),
• one or more turbines (140, 150);
**characterised in that** it comprises the regulation system according to the preceding claim.

13. The aircraft turbomachine (100) according to the preceding claim, **characterised in that** the propeller (110) and the low-pressure compressor (120) are connected by means of a low-pressure shaft (101) and a reducer (111), so that the rotational speeds of the propeller (110) and of the low-pressure compressor (120) are proportional.

14. The aircraft turbomachine (100) according to claim 13, **characterised in that** it consists of a double-flow turbojet engine, the propeller (110) being ducted.

15. The aircraft turbomachine (100) according to claim 13, **characterised in that** it consists of an open-rotor thruster, the propeller (110) being un-ducted.
